# EUROPEAN PATENT APPLICATION

(11) **EP 0 823 827 A2**
(43) Date of publication of application: **11.02.1998**
(21) Application number: 97306033.8
(22) Date of filing: 07.08.1997
(51) Int. Cl.: H04Q 7/24, H04Q 11/04

(54) **Mobile communications systems and methods of operating such systems**

(30) Priority: 09.08.1996 EP 96305877
(71) Applicant: Hewlett-Packard Company, Palo Alto, California 94304 (US)
(72) Inventor: I'Anson, Colin, Frenchay, Bristol BS16 1JL (GB); Farnham, Timothy David, Bradley Stoke, Bristol BS12 0HH (GB)
(74) Representative: Coker, David Graeme

(57) **Abstract**

A mobile communications system has base stations for communicating with wireless mobile devices and interconnected by an asynchronous transfer mode (ATM) communications network which includes ATM switching centres. A handover process coordinates transfer of communications with a mobile device from one base station to another as the device moves between their respective service areas. In order to avoid time-critical updating of routing tables in the switching centres in synchronization with handovers, base stations which are likely to be involved in a handover from the base station currently communicating with the mobile device are identified in advance. ATM cells being routed through the network to the mobile device are multicast to these base stations, in addition to the base station communicating with the mobile device. Thus when a handover occurs to another base station it is already receiving the cells destined for the mobile device without the need for a simultaneous change of the routing tables.

## Description

### Technical Field

This invention relates to mobile communications systems and to methods of operating such systems, in particular though not exclusively in the case of systems which include a connection-oriented communications network, such as for example an asynchronous transfer mode (ATM) network.

### Background Art

Mobile communications systems, such as for mobile telephony, are now being implemented on a widespread and growing scale. Such systems typically involve the use of multiple wireless base stations each of which is intended to communicate with mobile wireless communications devices (such as mobile telephones) located within a service area or in the vicinity of the respective base station. The base stations are connected to each other and to the public switched telephone network (PSTN) by computerized mobile switching centres in a 'backbone' communications network, which may itself use wireless and/or wireline techniques. Signals communicated between a base station and a mobile device are transferred by the mobile switching centres over the backbone communications network as appropriate to another base station for communication to another mobile device, or to the PSTN for communication to a device in that network.

Each mobile communications device and the base stations are arranged to monitor the characteristics of propagation of communications signals from one to the other (e.g. the strength of signals as received at the mobile device from several different base stations), and to select which base station is to communicate with the mobile device to provide optimal communications service. Thus, for example, the base station transmitting signals which are being received with the highest signal strength at the mobile device may be selected.

As the mobile device moves, the selection of a base station to provide optimal service will need to be changed, for example when the mobile device crosses from the service area of one base station to that of another. The associated process of transferring responsibility for communications with the mobile device from one base station to another is known as a 'handover' or 'handoff'. Performing a handoff so as to provide reliable, uninterrupted, high-quality service to the user of the mobile device requires careful, high-speed coordination of operations in the relevant base stations and at one or more mobile switching centres. This is turn typically involves the use of special-purpose real-time computer software in the mobile switching centres. Such software is extremely difficult and expensive to develop and maintain.

With the growth in usage of mobile communications devices, and extension of their use beyond voice telephony to include facsimile, electronic mail and other data services, for example, the communications capacity of the backbone communications networks needs to be increased. One network technology being considered in this respect is ATM. Although ATM offers the prospect of high-speed, high-throughput communications channels, it is essentially a connection-oriented technology. This characteristic manifests itself in practice in the need, for example, for routing tables in each ATM switch which enable the switch to direct each ATM message or cell along the correct path towards its intended destination. If ATM technology is used in the backbone network of a mobile communications system, a handoff operation would require updating of the routing tables in at least one ATM switch to indicate the altered path through the backbone network for cells carrying information destined for the relevant mobile device. Furthermore, this updating process would need to be precisely synchronized with the actual occurrence of the handoff, as determined by the base stations and/or the mobile device involved. Achieving this synchronization in a reliable manner, especially where more than one ATM switch is involved, would be a very difficult and demanding task.

US patent 5 487 065 (Acampora et al) describes a method and apparatus for supporting mobile communications in ATM-based networks, in which a communications route is determined which includes a connection from a base station via a switching node. A connection tree is determined to include potential connections from other base stations to the switching node. When a mobile user moves from one base station service area to another, so that the change in base station is within the connection tree, the call is automatically handed over or rerouted to another route within the connection tree. Thus the technique described in US 5 487 065 avoids conventional handoffs, by setting up routing table entries for all potential connections in the connection tree, so long as the mobile device remains within the service area of a base station in the connection tree. However, as soon as the mobile device moves into the service area of a base station not in the connection tree, a conventional handoff is required, with the attendant problems of synchronization discussed above. Accordingly it can be seen that although the technique of US 5 487 065 may delay occurrence of the handoff synchronization problem, it does nothing whatsoever to solve it.

It is an object of this invention to facilitate the use of ATM and other network technologies in a mobile communications system, without the necessity for precise synchronization among switching devices.

### Disclosure of Invention

According to one aspect of this invention there is provided a mobile communications system comprising: at least one mobile communications device; a plurality of base stations for communicating with said mobile communications device; selection apparatus for effecting selection of which of said base stations communicates with said mobile communications device and for changing said selection in accordance with characteristics of propagation of communications signals between said base stations and said mobile communications device; a communications network connected to the base stations for transfer in the network of signals communicated between selected base stations and the mobile communications device; identifying apparatus for identifying base stations which are not selected for communication with said mobile communications device and which may become selected for communication therewith as a result of a change in said selection; and multicast apparatus for causing said communications network to multicast communications signals destined for said mobile communications device to base stations identified by said identifying apparatus.

According to another aspect of this invention there is provided a mobile communications system comprising: at least one mobile communications device; a plurality of base stations for communicating with said mobile communications device; selection apparatus for effecting selection of which of said base stations communicates with said mobile communications device and for changing said selection in accordance with characteristics of propagation of communications signals between said base stations and said mobile communications device; and a communications network connected to the base stations for transfer in the network of signals, in the form of successive distinct portions of data, communicated between selected base stations and the mobile communications device; each of said base stations being arranged, when it is involved in a change of base station selection
- in the case of a base station ceasing to be selected, to append an extra data portion to the sequence of data portions it has forwarded from the mobile communications device to the communications network, or alternatively
- in the case of a newly-selected base station, to prefix with an extra data portion the sequence of data portions it forwards from the mobile communications device to the communications network,
and the communications network using the extra data portion to coordinate transfer of the sequences of data portions received via the station ceasing to be selected and the newly-selected station. This technique is useful for ensuring that data contained in, for example, ATM cells reaches the intended destination in the correct sequence.

According to further aspect of this invention there is provided a method for operating a mobile communications system having at least one mobile communications device, a plurality of base stations for communicating with said mobile communications device, and a communications network connected to the base stations for transfer in the network of signals communicated between said base stations and the mobile communications device, the method comprising the steps of: effecting selection of which of said base stations communicates with said mobile communications device, and changing said selection in accordance with characteristics of propagation of communications signals between said base stations and said mobile communications device; identifying base stations which are not selected for communication with said mobile communications device and which may become selected for communication therewith as a result of a change in said selection; and causing said communications network to multicast communications signals destined for said mobile communications device to base stations identified by said identifying step.

According to another aspect of this invention there is provided a method for operating a mobile communications system having at least one mobile communications device, a plurality of base stations for communicating with said mobile communications device, and a communications network connected to the base stations for transfer in the network of signals, in the form of successive distinct portions of data, communicated between said base stations and the mobile communications device, the method comprising the steps of: effecting selection of which of said base stations communicates with said mobile communications device, and changing said selection in accordance with characteristics of propagation of communications signals between said base stations and said mobile communications device; causing each said base station, when it is involved in a change of base station selection
- in the case of a base station ceasing to be selected, to append an extra data portion to the sequence of data portions it has forwarded from the mobile communications device to the communications network, or alternatively
- in the case of a newly-selected base station, to prefix with an extra data portion the sequence of data portions it forwards from the mobile communications device to the communications network;
and using the extra data portion to coordinate transfer in the communications network of the sequences of data portions received via the station ceasing to be selected and the newly-selected station.

### Brief Description of Drawings

A mobile communications system and a method of operating the same in accordance with this invention will now be described, by way of example, with reference to the accompanying drawings, in which:
- Figure 1: shows a mobile communications system;
- Figure 2: shows simplified examples of switching centre routing tables and base station registration tables prior to a handover;
- Figure 3: shows simplified examples of the same switching centre routing tables and base station registration tables after a handover; and
- Figure 4: is a flow chart showing procedures involved in implementing one embodiment of the invention.

### Best Mode for Carrying Out the Invention, & Industrial Applicability

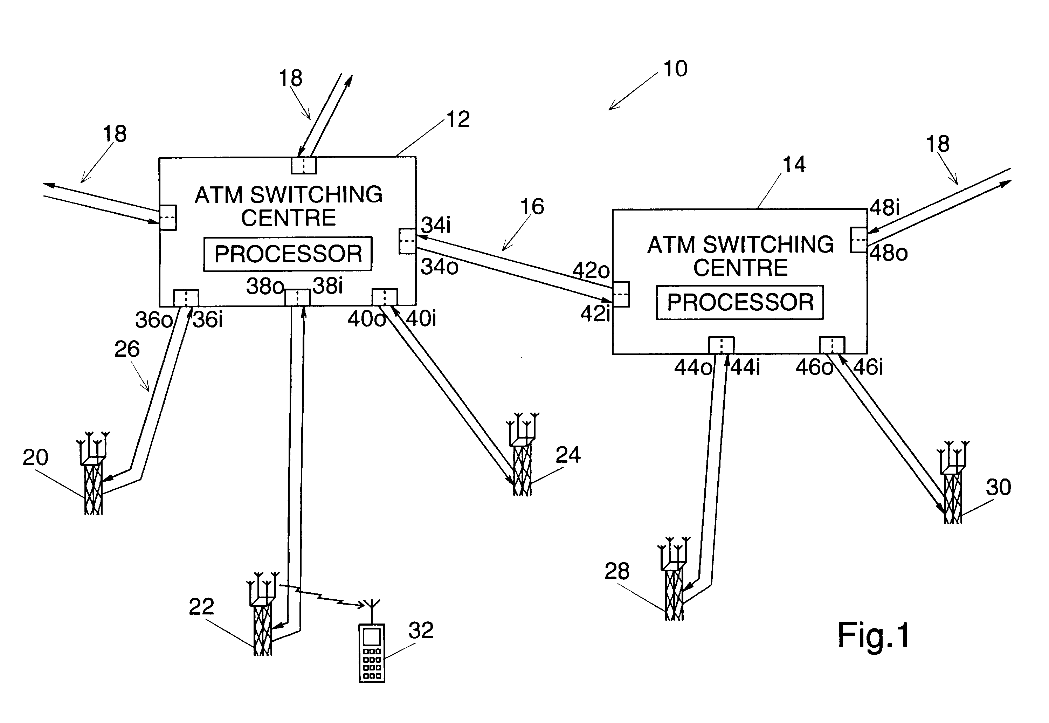

Referring to Figure 1, a portion 10 of a mobile communications system comprises two mobile switching centres 12 and 14 which are based on ATM network technology. These switching centres are interconnected by an ATM link 16, and are connected to other parts of the overall system by ATM links 18. Each ATM link can carry signals in both directions (as indicated by the twin, oppositely-directed arrows representing a link in Figure 1) and terminates in a switching centre at an input-port/output-port pair; signals pass from an output port of the sending switching centre (e.g. output port 34*o* of the switching centre 12) to an input port of the receiving switching centre (e.g. the input port 42i of the switching centre 14).

The switching centre 12 has three wireless base stations 20, 22 and 24 associated with it and connected to it via respective ATM links such as the link 26 for the base station 20. Each of these base stations is arranged to provide wireless communications to and from mobile devices, such as a mobile telephone 32, located within a respective service area. Two more base stations 28 and 30 are likewise associated with the switching centre 14 and connected to it via respective ATM links. In the following description it is assumed that the use of ATM techniques extends only so far as the base stations; however it is also possible for ATM to be used for the wireless communications with the mobile devices.

The manner in which the mobile telephone 32 communicates with a base station, and the manner in which a particular base station is selected for such communication in accordance with the location of the mobile telephone 32 (for example on the basis of comparison of strengths of signals as received by the mobile telephone from different base stations), form no part of this invention and have already been described elsewhere. Accordingly such details need not be repeated. Likewise, the basic concepts of ATM network operation are in themselves well known and need not be described herein.

It will however be noted that in an ATM network communications take the form of fixed-size cells each of which has a header portion followed by data portion. The header of a cell contains information to enable an ATM switch receiving the cell to determine how the cell should be routed through the switch towards its destination. In particular the cell header contains a virtual channel identifier (VCI). Each ATM switch contains a routing table, implemented for example as a lookup table in electronic memory. The routing table has a series of entries, each specifying a particular VCI value which is currently expected to occur at a particular input port of the switch. Each entry contains an indication of which of the switch's output ports a cell should be directed to (for transmission over the associated link) in the case of a cell received at the relevant input port and with the relevant VCI defined in that entry; the entry also defines a new VCI to be included in the cell's header upon transmission from that output port.

Entries are added to the routing table in each ATM switch involved in routing a new virtual channel, as part of a setup procedure when the new channel is being established. In the case of the system 10 this will occur, for example, upon setup of a new call to or from the mobile telephone 32. During such call setup the base station initially selected for communication with the mobile telephone 32 will also store an indication in a registration table (for example in memory within the base station) that the VCIs (one each for cells in each direction) of the new virtual channel established to support that call are associated with that particular mobile telephone 32 which is in its service area.

Functions such as updating of routing tables, routing of cells according to those tables, and other procedures described hereinafter may be performed, for example, by processors located in the switching centres 12 and 14 and operating under the control of appropriate software programs; likewise the updating of base station registration tables, handovers and other base station functions may be performed by program-controlled processors therein. In either case some functions may alternatively be performed by special-purpose hardware, for example to optimize speed of operation.

Signals received by the base station from the mobile telephone 32 are converted to ATM cells. These cells include a header containing the VCI which is indicated within the base station as being associated with the mobile telephone 32 for cells outbound from the base station. The cells are then sent to the ATM switching centre connected to the base station, for routing on into the communications system 10 in accordance with that VCI and the input port on which the switching centre receives them.

Likewise cells containing signals destined for the mobile telephone 32 are routed through the system 10 to the same switching centre, which inspects the VCI in the cells' headers and routes the cells to the base station in accordance with that VCI and the input port on which they are received; at the same time the switching centre substitutes the VCI which is indicated in the base station's registration table as being associated with the mobile telephone 32 for cells inbound to the base station. Thus when the cells are received at the base station it can identify the appropriate mobile telephone 32 and transmit the signals to it.

In accordance with this invention, cells containing signals destined for a mobile device are copied to several additional base stations, as well as being routed to the base station currently selected for communication with that device. This may be conveniently accomplished by use of a known multicast mechanism for routing multiple copies of a cell to multiple destinations in an ATM network. The additional base stations to receive these copied cells are chosen, as described below, to be those to which it is likely there may be a handover of communications with the mobile device from the base station currently selected for such communications.

Accordingly when a new virtual channel is being established in the system 10 to support communications with the mobile telephone 32 for example, additional entries are made in the routing tables of the switching centre(s) to which are connected, directly or indirectly, these chosen additional base stations. These additional entries identify the VCIs of cells arriving at the switching centre and related to the currently-selected base station, for multicast despatch of those cells, or copies of them, with new VCIs for the chosen additional base stations. Depending on the layout of the network and the base stations, a particular switching centre may route a cell only for the currently-selected base station, only for one or more additional base stations, or for both.

Additional virtual channels are created, for example under the control of the processors in the switching centres 12 and 14, to enable cells transmitted by any of the additional base stations (following a handover) to reach the same destination through the system 10 as cells transmitted by the currently-selected base station and carrying signals from the mobile telephone 32.

In addition a message is sent from the selected base station to the additional base stations, notifying them of the identity of the mobile telephone 32, so that each can store an indication of that identity in its registration table with the respective VCI for that station of multicast cells for the mobile telephone 32, and with the VCI of the respective additional virtual channel created for that additional base station.

Thus every base station to which it is likely there may be a handover will already be receiving cells destined for the mobile telephone 32 before any handover takes place; and each such base station also already has a virtual channel in existence over which it can despatch cells which it may subsequently receive from the mobile telephone 32 in the event of a handover. Accordingly time sensitive actions required for a handover involve solely the mobile telephone 32 and the relevant base stations; no time sensitive activities, such as carefully coordinated changes in routing tables, are required in the switching centres.

Prior to any handover, the additional base stations will be able to determine from their registration tables that they are not currently providing communications to the mobile telephone 32. Accordingly, they will simply discard the copies they receive of cells carrying signals for this telephone, possibly after caching them for a short interval as described below. Likewise, these base stations will not be generating any cells containing signals from this telephone, so the additional virtual channels for the additional base stations will remain inactive for the time being.

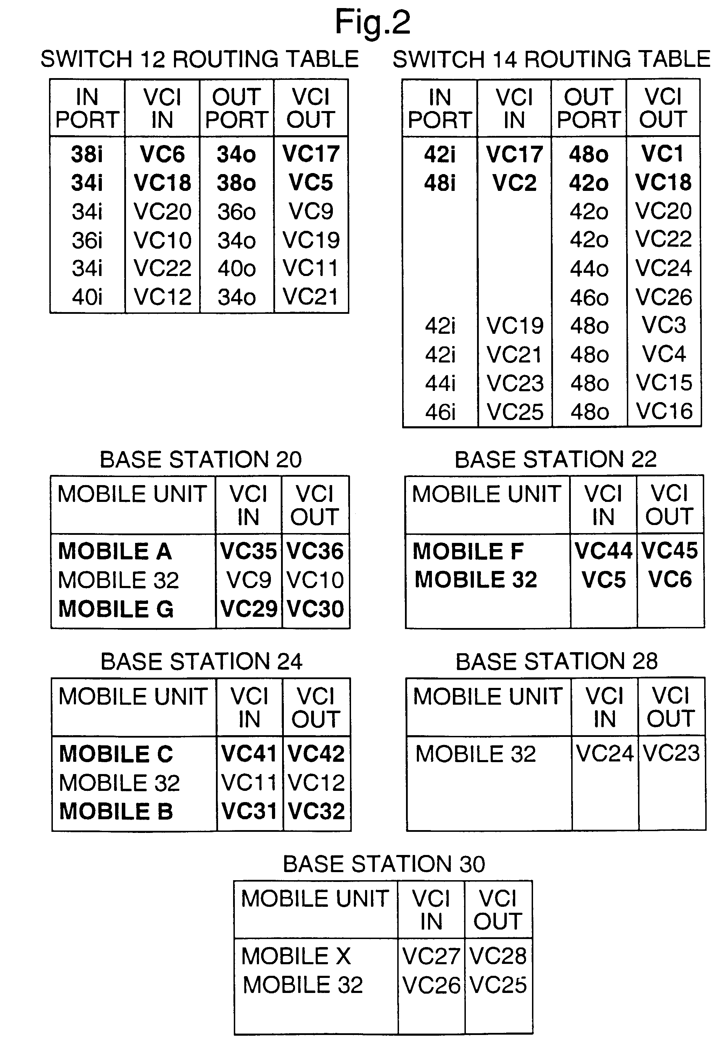

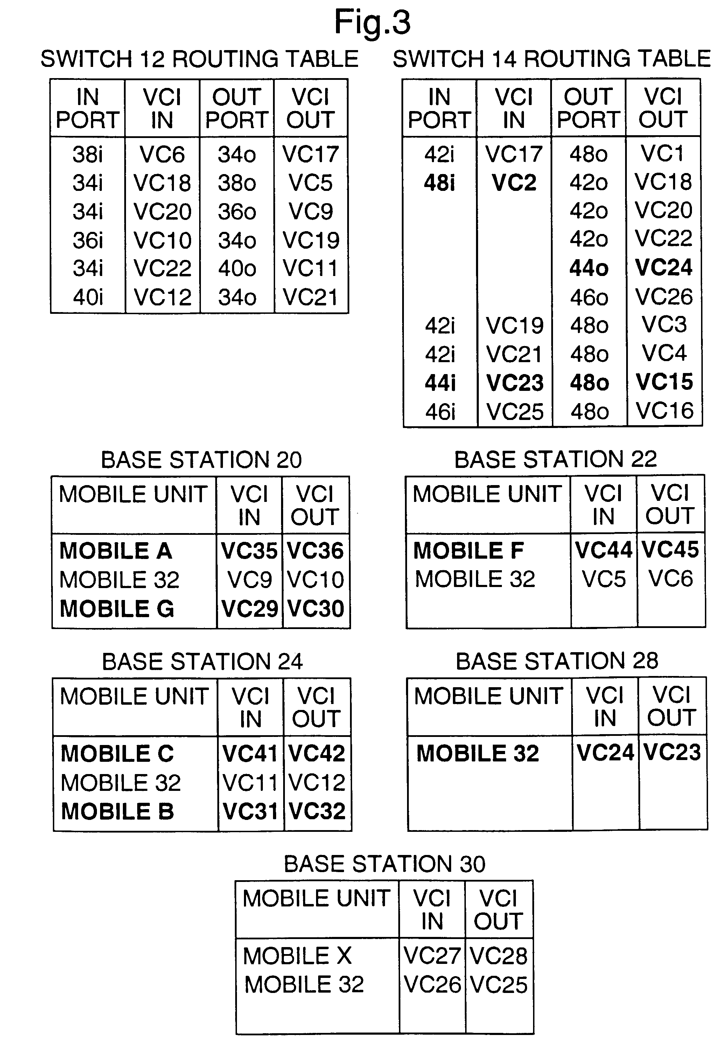

Figures 2 and 3 show simplified examples of routing and registration tables to illustrate implementation of the invention. In this illustration it is assumed that the mobile telephone 32 is initially within the service area of the base station 22 (connected to the switching centre 12), and that it subsequently moves into the service area of the base station 28 (connected to the switching centre 14) causing a handover to that base station. It is also assumed that the connection for the mobile telephone 32 extends through the switching centre 14, and the link 18 connected to its input and output ports 48*i*, 48*o*, to another part of the system 10. In addition it has previously been determined that a mobile device in the service area of the base station 22 is likely to be involved in a handover to any one of the base stations 20, 24, 28 and 30.

Referring to Figure 2, in order to support communications with the mobile telephone 32 via the base station 22, the routing table in the switching centre 12 contains an entry relating to cells received from the base station 22 on input port 38i (in this case with a VCI of VC6), directing those cells through the switching centre to output port 34*o* (towards the switching centre 14) with a VCI of VC17. Another entry in the routing table relates to cells received on input port 34i (from the switching centre 14) with a VCI of VC18, and directs those cells to output port 38*o* (that is to the base station 22), with a VCI of VC5. The registration table in the base station 22 correspondingly associates the VCI VC5 in cells it receives with the mobile telephone 32, and includes the VCI VC6 in the header of cells it produces to carry signals from the mobile telephone 32. The fact that the base station 22 is currently selected to provide communications with the mobile telephone 32 is indicated in that station's registration table in Figure 2 by the bold face entry for that device.

The routing table in the switching centre 12 contains additional entries for cells received at its input port 34i; one entry, for cells with a VCI of VC20, routes those cells to output port 36*o* and thus to the base station 20, with a VCI of VC9; another entry, for a VCI of VC22, routes the relevant cells to the output port 40*o*, and so to the base station 24, with a VCI of VC11. Entries also exist for cell transfer from the base station 20 to the input port 36*i* with a VCI of VC10, and from the base station 24 to the input port 40i with a VCI of VC12; these cells are routed to the output port 34*o* with a VCI of VC19 or VC21 respectively. In the base station 20 the VCIs VC9 and VC10 are associated with the mobile telephone 32, as are the VCIs VC11 and VC12 in the base station 24. However, as indicated by light face entries in the registration tables for both of these base stations in Figure 2, these entries are inactive because the mobile telephone 32 is not currently communicating with either base station.

The switching centre 14 has a routing table containing an entry for cells received on its input port 42*i* with a VCI of VC17 (which are in fact the cells transferred, via the output port 34*o* and the input port 38*i* of the switching centre 12, from the base station 22 and carrying signals from the mobile telephone 32). The routing table entry directs these cells to be forwarded to the link 18 connected to the output port 48*o*, with a VCI of VC1. Another entry in this routing table relates to cells received at input port 48i with a VCI of VC2: these cells are multicast by the switching centre 14 to five destinations. Three copies of these cells are directed to output port 42*o*, and thus to the switching centre 12, with VCIs of VC18, VC20 and VC22 respectively; the switching centre 12 will route these cells to the base stations 22, 20 and 24 respectively, as described above. Two further copies of these cells are directed to output ports 44*o* and 46*o*, with respective VCIs of VC24 and VC26, and thus to the base stations 28 and 30. This multicast entry enables all the base stations 20, 22, 24, 28 and 30 to receive cells destined for the mobile telephone 32.

Additional entries in the routing table relate to cells received on the input port 42i with VCIs of VC19 (i.e. from the base station 20) or VC21 (i.e. from the base station 24), and to cells received on the input ports 44*i* (VC23 - base station 28) and 46*i* (VC25 - base station 30). These additional entries all direct cells to the output port 48*o*, with VCIs of VC3, VC4, VC15 and VC16 respectively, and provide the additional virtual channels described above for the additional base stations 20, 24, 28 and 30. However, while the mobile telephone 32 remains in the service area of the base station 22, no cells will be generated for routing in accordance with these additional entries.

The base stations 28 and 30 have entries in their registration tables associating the pairs of VCIs VC23/VC24 and VC25/VC26 respectively with the mobile telephone 32. However, as in the case of the base stations 20 and 24, these entries are currently inactive.

Thus cells received by the switching device 14 on its input port 48*i* for the mobile telephone 32 (VCI VC2) are multicast to, and received by, all the base stations 20, 22, 24, 28 and 30. However, only the base station 22 has an active entry for the mobile telephone 32 in its registration table, so only that base station forwards the cell contents to that mobile device. The other four base stations merely discard their copies of these cells. Likewise only the base station 22 generates cells containing signals from the telephone 32, and forwards them via the switching centres 12 and 14.

Only two entries in the routing table in the switching centre 12 (for the input port 38i and the output port 38*o*) are actively consulted for routing cells with signals which originate from or actually reach the mobile telephone 32, as indicated in bold face in Figure 2. Two other entries (for the output ports 36*o* and 40*o*) are actively consulted for routing multicast cells, but do not result in signals reaching the mobile telephone 32.

Similarly, only two entries in the routing table in the switching centre 14 are actively consulted for routing cells with signals which originate from or actually reach the mobile telephone 32, again as indicated in bold face in Figure 2. Other portions of the multicast entry are actively consulted, but do not result in signals reaching the telephone 32.

When the mobile telephone 32 moves into the service area of the base station 28, the telephone and the base stations 22 and 28 initiate the necessary handover among themselves. The identification of the need for a handover and of the new base station involved, and of the timing of the handover, can follow conventional principles and need not be described here.

Following the handover, and as shown in Figure 3, the registration table in the base station 22 is updated so that it no longer shows that base station as being selected for communications with the mobile telephone 32; and the registration table in the base station 28 is also updated to show that base station as now being selected for that purpose. However, it should also be noted that, in contrast, the routing tables in the switching centres 12 and 14 remain unchanged. Only the identity of the entries in the routing tables which are actually consulted changes. Thus the entries in the routing table in the switching centre 14 which are now consulted for routing cells with signals which originate from or actually reach the mobile telephone 32 are that for the input port 44*i* (from the base station 28) and the portion of the multicast entry for the output port 44*o* (to that base station), as indicated in bold face in Figure 3. Other portions of the multicast entry continue to be actively consulted, but do not result in signals reaching the telephone 32. Similarly, although three entries in the routing table in the switching centre 12 are now consulted (for the output ports 36*o*, 38*o* and 40*o*), none of them results in signals reaching the mobile telephone 32.

Accordingly it can be seen that the content of the routing tables does not have to be altered to as part of the actual handover process, thereby avoiding any need for real-time coordination of routing table changes throughout the network. Following a handover, the inclusion of base stations in the group of additional base stations to which a subsequent handover may be made, and to which cells are multicast, will typically be reassessed. As a result of this reassessment it is likely that one or more base stations will no longer be regarded as likely to receive a handover of communications with the mobile device, and that one or more other base stations will need to be added to the list of additional base stations which may receive such a handover. The multicasting entries in the affected routing tables, and the entries for the additional virtual channels for cells potentially coming from the additional base stations, will need to be updated appropriately. Likewise, the new additional base stations will need to be informed of the identity of the mobile device so they can update their registration tables. However, none of these updating procedures is time-critical; there will generally be adequate time for them to be accomplished before another handover becomes necessary.

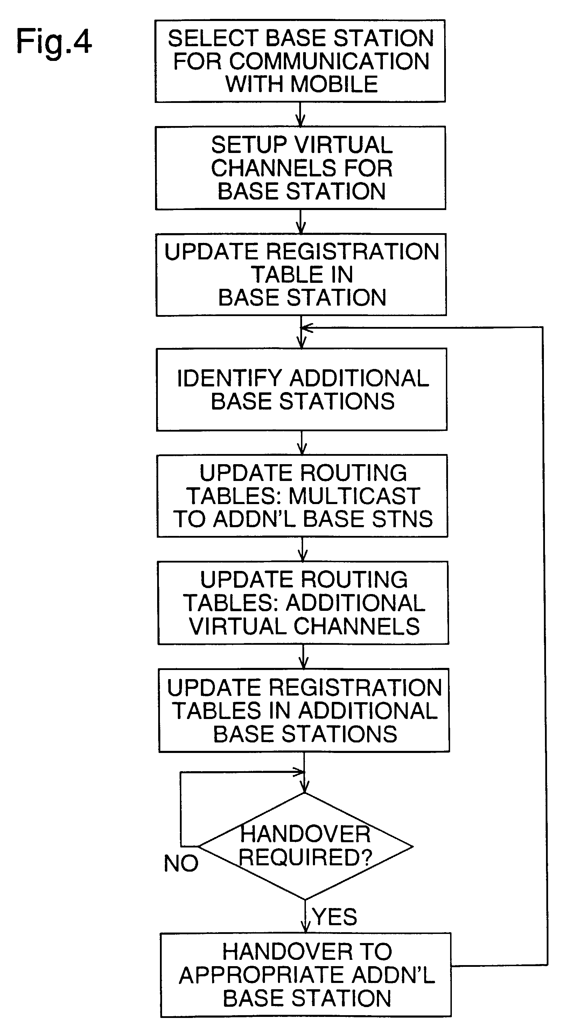

The various procedures involved in the example described above are summarized in flow chart form in Figure 4.

The choice of base stations to be included in a group of additional base stations to receive multicast cells can be accomplished in various ways. In a newly-established network it may be appropriate initially to be guided by the geographic location of the base stations. For example, if the base stations are located in a notional hexagonal cluster (i.e. with each base station's service area surrounded by the service areas of six other stations in an approximately hexagonal pattern), the additional base stations may simply be chosen to be the six stations in the hexagon surrounding the base station currently communicating with the mobile device. After a handover it will typically be necessary to remove three base stations from the group of additional stations, and add three new ones.

As operating experience is gained with a system, it may be possible to refine the procedure for choosing base stations for multicasting, in the light of that experience. Thus it may be found that a busy highway extends through the service areas of a succession of base stations, and that consequently most handovers occur between those base stations rather than to base stations further to either side of the highway. In that case it may be effective to include only the base stations along the highway in the group chosen for multicasting.

It is also possible to change the group chosen for multicasting on a dynamic basis, even if a handover has not occurred. Thus base stations could be arranged to monitor signals received from mobile devices in adjacent service areas, and to initiate a request to the switching centre processors to be included in the group of stations receiving multicast cells for that device, in anticipation of the possibility that a handover to the requesting station could occur. Conversely, if a station receiving multicast cells for a particular mobile device finds that it is no longer receiving wireless signals from the mobile device, it may request to be removed from the multicast group, on the basis that handover to that station is no longer likely.

As thus far described the invention facilitates the handover process in terms of avoiding the need for precisely synchronised alterations to switch routing tables. However, another problem which must be addressed is that of ensuring that the data contained in the ATM cells reaches their destination in the correct sequence, despite the changes in routing which result from a handover. This problem is complicated by the absence in ATM systems of any sequence number or the like by means of which the temporal ordering of cells can be determined.

According to the present invention, this problem may be solved for the downlink (to the mobile station) by providing at each base station 20, 22, 24 (Figure 1) a buffer memory. If such a base station receives multicasted cells as described above for a mobile station with which it is not currently communicating, it caches them in this buffer memory for a predetermined short period prior to discarding them. The duration of this period may be determined by operational experience, and will depend on the number of cells which might typically be affected by a handover. In addition the base station computes an identifying value for each successive cached cell, for example by applying a known hashing function (e.g. the remainder of a polymonial division) to the contents of the cell.

The base station which is communicating with the mobile station does not cache the cells it receives through the network, but forwards the data they contain (or the cells themselves) directly to the mobile station. However, it does compute an identifying value for each cell whose contents are forwarded, using the same hashing function, and maintains a temporary record of the hash values identifying the cell contents most recently forwarded. The number of hash values this record contains will depend on the length of each hash value and thus the number of distinct hash values available; for longer hash values only two to three values may be sufficient, whereas for shorter hash values five or more may be desirable.

When a handover takes place as described earlier, the base station which has been providing communications with the mobile station ceases transmission, and forwards its record of hash values via the switching centre to the base station to which the mobile station has been handed over. This base station then compares the received list of hash values with its own list of hash values for multicasted cells it has received and cached in its buffer. Thus it can identify the first cached cell whose contents have not yet been transmitted to the mobile station, and commence its transmissions with that cell. Accordingly the mobile station receives the cell data in the correct sequence.

Although in principle only a single hash identifying value needs to be forwarded, for the final cell whose contents are transmitted to the mobile station before handover, forwarding a list of several consecutive hashed values provides a more robust system and may enable use of a hashing function which is relatively simple and easy to calculate.

As an alternative to computation and storage of a temporary record of hash values in the base station which is communicating with the mobile station, this temporary record can be computed and stored in the mobile station itself as it receives the contents of each cell. Then when a handover occurs the mobile station transmits this record to the base station to which the mobile has been handed over, for that base station to identify the cell with which it should commence transmissions. This alternative is particularly advantageous in the case where handover is initiated by the mobile station.

The problem of maintaining the correct cell sequence for the uplink (from the mobile station) may be solved in either of two ways. In a first method, a base station which is completing a handover to another base station appends a distinctive 'tail' cell to the cell stream it has been forwarding from the mobile station to the switching centre. The switching centre is provided with equipment such as a first-in first-out (FIFO) buffer to ensure that cells received from the base station to which handover has occurred are held until all cells from the handing over base station have been received (as indicated by reception and recognition of the tail cell) and forwarded.

In a second method, a base station to which handover has occurred can insert a 'head' cell before the cell stream it starts forwarding from the mobile station; this head cell contains a hashed identifying value, supplied during the handover, for the final cell which was forwarded by the handing over base station. The switching centre caches the cell stream received from the base station to which handover occurred, until it detects reception of the final cell from the handing over base station, identified by the hashed value supplied in the head cell.

Both of these methods for maintaining cell sequence on the uplink require particular modifications to the switches and their management software.

For the sake of clarity the description above has referred to the case in which each mobile telephone 32 is associated with a unique VCI. In practice a single mobile telephone 32 may have several virtual channels associated with it, e.g. to cater for signalling in addition to transmission, or to carry video and/or data traffic as well as voice traffic. In this case the techniques described above may still be used, to coordinate handovers of all the channels together, by using a virtual path identifier (VPI) in the ATM cell headers, instead of a VCI.

In another modification, virtual channels between mobile telephones and a particular switching centres switch to which they are registered may be identified by a combination of VPI and switch port number (a so-called virtual path connection number, or VPCN). The switch could then maintain the registration tables described above, and perform selective discarding of cells at its output ports instead of at the base stations, which has the advantage of reducing base station complexity. The benefit of rapid handover without updating the switch routing tables is still obtained, but the registration table which has to be updated will now reside at the switching centre instead of at the base station. Nonetheless this could still be achieved far more rapidly than a routing table change, particularly if the mobile telephone hands over to another switching centre.

Although the invention has been described in terms of multicasting cells to specific destinations by use of appropriate VCIs or VPIs, it is also possible to use other approaches. Thus, for example, every switching centre could simply multicast relevant cells to all its output ports.

Likewise, although the invention has particularly beneficial application in a connection-oriented cell-relay system such as an ATM system, it is also usable in other kinds of system, such as frame relay systems and connectionless systems.

## Claims

1. A mobile communications system comprising:
at least one mobile communications device;
a plurality of base stations for communicating with said mobile communications device;
selection apparatus for effecting selection of which of said base stations communicates with said mobile communications device and for changing said selection in accordance with characteristics of propagation of communications signals between said base stations and said mobile communications device;
a communications network connected to the base stations for transfer in the network of signals communicated between selected base stations and the mobile communications device;
identifying apparatus for identifying base stations which are not selected for communication with said mobile communications device and which may become selected for communication therewith as a result of a change in said selection; and
multicast apparatus for causing said communications network to multicast communications signals destined for said mobile communications device to base stations identified by said identifying apparatus.

2. A system according to claim 1, wherein said identifying apparatus identifies base stations which may become selected by identifying base stations which are located in proximity to a currently-selected base station.

3. A system according to claim 1, wherein said identifying apparatus identifies base stations which may become selected by identifying base stations which have been selected upon at least one previous change of selection from a currently-selected base station.

4. A system according to claim 1, wherein said identifying apparatus identifies base stations which may become selected by identifying base stations which are not selected and which are detecting communications signals from said mobile communications device.

5. A system according to any one of the preceding claims, wherein said communications network is connection-oriented.

6. A system according to claim 5, wherein said communications network is an asynchronous transfer mode network.

7. A system according to any one of the preceding claims, wherein
- signals are communicated through the communications network in the form of successive distinct portions of data;
- each of the identified base stations associates each data portion it receives with an identifying value related to the content of that data portion;
- the identified base stations temporarily store the data portions they receive; and
- upon change of selection of base station, the newly-selected base station uses the identifying values to identify temporarily-stored data portions it should communicate to the mobile device.

8. A system according to claim 7, wherein
- the base station selected for communication with said mobile communications device also associates each data portion it receives with an identifying value related to the content of that data portion; and
- upon change of selection of base station, the base station previously selected communicates the identifying value for at least the data portion it has most recently received, to the newly-selected base station, for that newly-selected base station to use in identifying temporarily-stored data portions it should communicate to the mobile device.

9. A system according to claim 7, wherein
- the mobile communications device also associates each data portion it receives with an identifying value related to the content of that data portion; and
- upon change of selection of base station, the mobile communications device communicates the identifying value for at least the data portion it has most recently received, to the newly-selected base station, for that newly-selected base station to use in identifying temporarily-stored data portions it should communicate to the mobile device.

10. A system according to any one of claims 7 to 9, wherein the identifying value associated with a data portion is derived by performing a hashing operation on the contents of that data portion.

11. A system according to any one of claims 7 to 10, wherein upon change of selection of base station the identifying values for a plurality of data portions are communicated to the newly-selected base station.

12. A mobile communications system comprising:
at least one mobile communications device;
a plurality of base stations for communicating with said mobile communications device;
selection apparatus for effecting selection of which of said base stations communicates with said mobile communications device and for changing said selection in accordance with characteristics of propagation of communications signals between said base stations and said mobile communications device; and
a communications network connected to the base stations for transfer in the network of signals, in the form of successive distinct portions of data, communicated between selected base stations and the mobile communications device;
each of said base stations being arranged, when it is involved in a change of base station selection
- in the case of a base station ceasing to be selected, to append an extra data portion to the sequence of data portions it has forwarded from the mobile communications device to the communications network, or alternatively
- in the case of a newly-selected base station, to prefix with an extra data portion the sequence of data portions it forwards from the mobile communications device to the communications network,
and the communications network using the extra data portion to coordinate transfer of the sequences of data portions received via the station ceasing to be selected and the newly-selected station.

13. A method for operating a mobile communications system having at least one mobile communications device, a plurality of base stations for communicating with said mobile communications device, and a communications network connected to the base stations for transfer in the network of signals communicated between said base stations and the mobile communications device, the method comprising the steps of:
effecting selection of which of said base stations communicates with said mobile communications device, and changing said selection in accordance with characteristics of propagation of communications signals between said base stations and said mobile communications device;
identifying base stations which are not selected for communication with said mobile communications device and which may become selected for communication therewith as a result of a change in said selection; and
causing said communications network to multicast communications signals destined for said mobile communications device to base stations identified by said identifying step.

14. A method according to claim 13, wherein base stations which may become selected are identified by identifying base stations which are located in proximity to a currently-selected base station.

15. A method according to claim 13, wherein base stations which may become selected are identified by identifying base stations which have been selected upon at least one previous change of selection from a currently-selected base station.

16. A method according to claim 13, wherein base stations which may become selected are identified by identifying base stations which are not selected and which are detecting communications signals from said mobile communications device.

17. A method according to any one of claims 13 to 16, wherein said communications network is connection-oriented.

18. A method according to claim 17, wherein said communications network is an asynchronous transfer mode network.

19. A method according to any one of claims 13 to 18, wherein
- signals are communicated through the communications network in the form of successive distinct portions of data;
- each of the identified base stations associates each data portion it receives with an identifying value related to the content of that data portion;
- the identified base stations temporarily store the data portions they receive; and
- upon change of selection of base station, the newly-selected base station uses the identifying values to identify temporarily-stored data portions it should communicate to the mobile device.

20. A method for operating a mobile communications system having at least one mobile communications device, a plurality of base stations for communicating with said mobile communications device, and a communications network connected to the base stations for transfer in the network of signals, in the form of successive distinct portions of data, communicated between said base stations and the mobile communications device, the method comprising the steps of:
effecting selection of which of said base stations communicates with said mobile communications device, and changing said selection in accordance with characteristics of propagation of communications signals between said base stations and said mobile communications device;
causing each said base station, when it is involved in a change of base station selection
- in the case of a base station ceasing to be selected, to append an extra data portion to the sequence of data portions it has forwarded from the mobile communications device to the communications network, or alternatively
- in the case of a newly-selected base station, to prefix with an extra data portion the sequence of data portions it forwards from the mobile communications device to the communications network; and
using the extra data portion to coordinate transfer in the communications network of the sequences of data portions received via the station ceasing to be selected and the newly-selected station.
